# EUROPEAN PATENT APPLICATION

(11) **EP 4 011 198 A1**
(43) Date of publication of application: **15.06.2022**
(21) Application number: 20214335.0
(22) Date of filing: 15.12.2020
(51) Int. Cl.: A01G 23/06, A01G 23/093

(54) **A FORESTRY AUTONOMOUS VEHICLE**

(30) Priority: 11.12.2020 PT 2020116934
(71) Applicant: INESC TEC Instituto de Engenharia de Sistemas de Computadores, Tecnologia e Ciência, 4200-465 Porto (PT)
(72) Inventor: Baptista Neves dos Santos, Filipe, 4200-465 Porto (PT); Bianchi de Aguiar Araújo Figueiredo, André, 4200-465 Porto (PT)
(74) Representative: do Nascimento Gomes, Rui

(57) **Abstract**

The present invention is enclosed in the area of forestry maintenance vehicles, which provide for more or less autonomous mulching or chipping of forest vegetation, providing the cleaning of a forest. The object of the present invention provides a feasible practical autonomous solution for forest vegetation maintenance and/or biomass harvesting - including at least tree pruning (such as Eucalyptus, Pinus) and mulching and harvesting of trees such as Gorse, Acacia, Genisteae or Bramble -, which may be used to feed the production of in biocompositive materials, pellets or in organic fertilizers.

## Description

### FIELD OF THE INVENTION

The present invention is enclosed in the area of forestry maintenance vehicles, which provide for more or less autonomous mulching or chipping of forest vegetation, providing the cleaning of a forest.

### PRIOR ART

A forest is an area of land dominated by trees. According to the definition of the Food and Agriculture Organization of the United Nations, a forest is defined as land spanning more than 0.5 hectares with trees higher than 5 meters and a canopy cover of more than 10 percent, or trees able to reach these thresholds in situ. It does not include land that is predominantly under agricultural or urban land use [1].

Forest plays an important role in the world ecosystems. Forests account for 75% of the gross primary production of the Earth's biosphere and contain 80% of the Earth's plant biomass. Net primary production is estimated at 21.9 gigatons carbon per year for tropical forests, 8.1 for temperate forests, and 2.6 for boreal forests [1].

Despite the high relevance of forest in world ecosystems, the climate change brings new challenges to forest management. Forests are more exposed to bigger wildfires which, when close to villages/populations, cause deaths/injuries and goods losses. This fact imposes the need of performing activities such as forest vegetation maintenance and biomass harvesting.

To harvest main forest crops/tree, there are harvester implements for manned tractors, such as those described in the patent / patent application publications WO2018/012255 A1, JP2019054754 A, US6691751 B2. However, in vegetation maintenance and biomass harvesting - between main crop harvesting - the common procedure is based in: man operated small machinery with rudimentary implements or in humans with specific tools.

In the art are also known tractors which are remotely operated and equipped with forestry mulcher or mower.

Also known in the art are more or less elaborate manned machinery that perform integrated tasks related to harvesting biomass in the forest: such solutions typically allow to harvest, shred and blow the shredded material through a discharge chute into a separate trailer or collecting bin.

Furthermore, forest vegetation maintenance and biomass harvesting performed to prevent fires and vegetation control typically has no economical and viable solutions, as presented in the document Global Forest Resources Assessment 2020 - Terms and definitions of the Biomass Working Group 2013, not all forest biomass is easily exploited because of its elevated costs and harsh terrains conditions.

The selection of stump and shoots is a process applicable to forest species, such as eucalyptus stands, with vegetative reproductive capacity after cutting, developing new shoots that result from dormant buds from the sectioned part (stump). The selection of shoots is necessary in order to make commercially viable stands for commercial purposes and contributes to: reducing the risk of fire, reducing installation, maintenance and cutting costs.

The selection of stump and stool shoots is a manual operation with chainsaw. There is no machine known in the art dedicated to the rod selection operation. Machines used in final logging operations are unsuitable for the rod selection operation and given the size of these machines, their manoeuvrability is not suitable for that required in a rod selection operation.

On the other hand, in conventional manual stick selection operation, the surplus / residues of the operation to be used need to be processed by an additional manually fed chipping machine. Existing crane-fed chippers are only suitable for final cutting operations and therefore oversized for rod selection operations. And, in such cases, the resulting material is accumulated in mounds on the ground or deposited in a transport truck. In addition, there is no known solution for depositing the resulting material directly into bags and this is done manually and subsequently.

The forest vegetation maintenance and biomass harvesting include at least tree punning (Eucalyptus, Pinus) and mulching and harvesting Gorse, Acacia, Genisteae, bramble. From these operations results woody residues that can be incorporated in bio composite materials, pellets or in organic fertilizers.

Patent application documents CN 102085664 and CN 102135766 refer to generic vehicles able to move in a forest, yet providing no solution for the problem of an autonomous operation in forest vegetation maintenance maintenance and biomass harvesting.

Patent US 9648808 presents a mobile platform with a guidance system and a header that harvests biomass, a biomass processor and a storage container. Patent US 8066043 relates to a combination forest biomass and tree harvester, a harvesting head assembly, and methods for harvesting trees and forest biomass. Patent US 8250843 relates to a combination of a biomass harvester and baler, in some embodiments. However, there is no integrated robotic solution that allows to autonomously carry out brush cleaning, selection and collection of woody material, neither to provide the further grinding and storage of the collected material.

The present solution to innovatively overcomes such issues.

### SUMMARY OF THE INVENTION

As above described, prior art provides no truly autonomous solution for the selection of forest plants or elements of forest plants, such as rods. In several embodiments of the object of the present invention, solutions are provided for the functions of selection of an element of a forest plant (such as a rod or a shoot), mulching, chipping and/or cutting of selected elements and storage / packaging of the mulched/chipped elements for future use. The object of the present invention further allows for flexible use and operations where manoeuvrability is reduced.

The object of the present invention provides a feasible practical autonomous solution for forest vegetation maintenance and/or biomass harvesting - including at least tree pruning (such as Eucalyptus, Pinus) and mulching and harvesting of trees such as Gorse, Acacia, Genisteae or Bramble -, which may be used to feed the production of in biocompositive materials, pellets or in organic fertilizers.

It is an object of the present invention a forestry autonomous vehicle which comprises:
- mulching and/or chipping means configured to mulch and/or chip at least one element of a forest plant,
- sensing means, the sensing means comprising optical means capable of obtaining optical data from at least one section at least partially surrounding the vehicle,
- means for selective identification configured to identify at least one element of a forest plant to be mulched and/or chipped based on the optical data obtained by the sensing means, and
- control means, the control means being configured for, based on optical data on the identified at least one element of a forest plant, actuate the mulching and/or chipping means to mulch and/or chip the identified at least one element of a forest plant.

The vehicle of the present invention thereby comprises mulching and/or chipping means which are able to mulch and/or chip one or more elements of one or more forest plants, such as the referred shoots, thereby pruning a forest plant such as a tree. The mulching and/or chipping means are actuated by the control means, to perform the associated mulching and/or chipping. In its turn, the control means actuate the mulching and/or chipping means to mulch/chip an element which has been identified by the means for selective identification, which use sensor data to identify at least one element to be mulched/chipped. Such sensor data consists of optical data obtained by the sensor means / optical means, meaning that the device is able to obtain optical data and, in such data, identify the elements to be mulched/chipped. Such allows for an autonomous operation of the vehicle, which is able to autonomously provide the necessary forest maintenance, through the combination of the referred inventive features. Furthermore, such leads to an inventive aspect of the vehicle of the present invention, the means for selective identification being configured to, based on the optical data obtained by the sensing means, identify at least one element of a forest plant to be mulched/chipped and/or at least one element of a forest plant to be left intact. The vehicle can thereby perform pruning, i.e., mulching or chipping certain elements - such as shoots - and leaving other intact. The vehicle may also mulch/chip an entire forest plant, such as a bush.

In an embodiment, the forest plant consists of a tree or a bush.

In another embodiment, the forest plant comprises Eucalyptus, Pinus, Gorse, Acacia, Genisteae and/or Bramble.

In yet another embodiment, the means for selective identification are further configured to identify a plant based on the obtained optical data. The plant and/or the element of the plant are identifiable through a computational methodology for plant identification known in the art.

It is also an object of the present invention a method for automatic forest vegetation maintenance and/or biomass harvesting which comprises using the vehicle of the present invention, in any of its embodiments, for mulching, chipping and/or harvesting at least one element of a plant. The method may further comprise using the obtained mulched and/or chipped and harvested plant element for inclusion in biocompositive materials, pellets, biogas, or in organic fertilizers.

### DESCRIPTION OF FIGURES

Figure 1 - a representation of an embodiment of the vehicle of the present invention.
Figure 2 - a representation of a detail front and side views of the mulching and/or chipping means and the connecting means.
Figure 3 - a representation of a detail view of the cutting means, comprising the manipulator and a cutting element.
Figure 4 - a representation of a detail view of cutting means, in particular a manipulator in the form of a crane with four degrees of freedom.
Figure 5 - representation of the system of the present invention.
Figure 6 - schematic representation of several configurations, components and sensors of the vehicle of the present invention.
Figure 7 - representation of the vehicle of the present invention connected to a recharging station.

### DETAILED DESCRIPTION

The more general configurations of the present invention are described in the Summary of the invention. Such configurations are detailed below in accordance with other advantageous and/or preferred embodiments of implementation of the present invention.

In an inventive aspect of the vehicle of the present invention, it further comprises:
- storage means for storing mulched and/or chipped elements of forest plants, and
- connecting means configured to connect the storage means to the mulching and/or chipping means and thereby transport a mulched and/or chipped element into the storage means.

The storage means provide for the harvesting of mulched/chipped elements, since the vehicle may keep on operating while a capacity of the storage means has not yet been reached, thereby enabling to mulch/chip several elements and, at the same time, harvest/store such elements for one of the described subsequent uses. The connecting means provide for a connection between the mulching and/or chipping means to the storage means. In an embodiment, the connecting means may comprise suction or blowing means, able to transport a mulched and/or chipped plant element from the mulching and/or chipping means into the storage means. Such allows that the mulched/chipped elements are more effectively moved/transported into the storage means. The storage means may consist of a tipping transport box, which allows to an eased removal of the mulched/chipped elements. The connecting means may further comprise a tunnel, the tunnel being so arranged that in one edge is connected to the mulching and/or chipping means and on an opposite edge is releases the mulched and/or chipped plant elements from above or adjacently to a top section of the storage means, the suction or blowing means being configured to provide the movement of mulched and/or chipped plant elements through the tunnel and into the storage means.

In an advantageous embodiment, the means for selective identification are further configured to determine if the identified at least one element of a forest plant to be mulched and/or chipped is to be stored, the control means being further configured to actuate the connecting means such that a mulched and/or chipped element is transported and thereby provided into the storage means based on such determination of the means for selective identification. The vehicle of the present invention thereby allows not only to maintain a forest - for instance through the referred pruning capabilities - but also to determine if a mulched/chipped element is to be stored or not. It thereby also allows to autonomously collect the desired elements based on one or more predefined aspects of the identified plant, for instance a plant or an element of a plant with a higher potential of chemical energy.

In another aspect of the vehicle of the present invention the mulching and/or chipping means comprise:
- mulching means configured to mulch at least one element of a forest plant, preferably consisting of a mulching rod, and/or
- chipping means configured to chip at least one element of a forest plant, preferably consisting of a chipper.

Furthermore, in another inventive aspect of the vehicle of the present invention, it may further comprise cutting means, the cutting means being configured to cut at least one element of a forest plant, thereby separating such element from a remaining part of the forest plant. The vehicle thereby provides for multifunctional cutting/chipping/mulching, by simultaneously providing the cutting of forest plants or their elements. Preferably, the cutting means comprise manipulating means configured to grasp the at least one element of the forest plant and at least one cutting element configured to cut the element of the forest plant. The means for selective identification may further be configured to determine if the identified at least one element of a forest plant to be cut is further to be mulched and/or chipped, the control means being further configured to actuate the manipulating means such that a cut element is provided onto the mulching and/or chipping means and thereby mulched and/or chipped based on such determination of the means for selective identification. Thus, the autonomous operation present in the mulching/chipping through the selective identification of plants and/or their elements to be mulched/chipped is also applicable to the cutting of plants or their elements.

In a further inventive aspect, the means for selective identification are further configured to determine if the identified at least one element of a forest plant mulched and/or chipped upon cutting is also to be stored, the control means being further configured to actuate the connecting means such that a mulched and/or chipped upon cutting element is transported and thereby provided into the storage means based on such determination of the means for selective identification. Thus, the autonomous operation present in the harvesting of mulched/chipped elements is also applicable to the cutting of plants or their elements.

Several inventive aspects of the manipulating means are described subsequently.

The manipulating means configured to grasp may comprise at least one claw formed by two claw elements configured to cooperate to grasp at least one element of a plant.

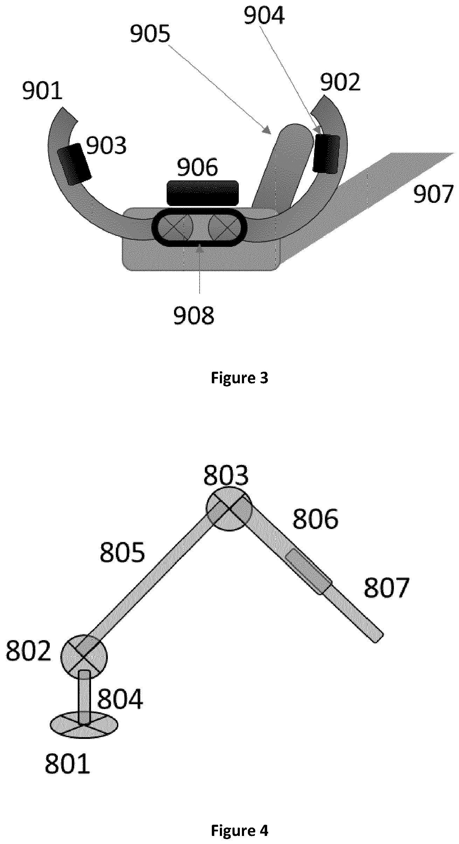

The manipulating means configured to grasp may be further configured to have at least three degrees of freedom providing rotation, one of such degrees of freedom providing rotation around an axis substantially parallel to a ground plane and two of such degrees of freedom providing rotation round an axis substantially perpendicular to the ground plane. Figure 4 contains an embodiment of such manipulation means.

The manipulating means configured to grasp may be further configured to have an additional degree of freedom providing translation, such translation being provided at an edge of the manipulating means, such edge comprising the claw and the cutting element, and the translation providing a higher or lower extension of such edge. Figure 4 contains an embodiment of such manipulation means.

Preferably, the at least one cutting element consists of a chainsaw.

In another inventive aspect, and as provided for the mulching and/or chipping means, the means for selective identification are further configured to identify at least one element of a forest plant to be cut based on the optical data obtained by the sensing means.

In another embodiment of the vehicle of the present invention, it comprises mobility means, the mobility means being capable of providing a movement of the vehicle in any direction of a terrain plane, preferably comprising i) at least two shafts with two wheels each, wherein at least one of such shafts preferably the two shafts, is rotatable, or comprising ii) tracks.

In an advantageous aspect of the vehicle of the present invention, the optical means comprise Light Detection and Ranging (LiDAR) based sensor, at least one optical sensor such as a stereo camera, preferably at least two optical sensors, and their combinations.

In another advantageous aspect of the vehicle of the present invention, it further comprises means for localisation, the means for localisation preferably comprising at least one inertial sensor and/or a global navigation satellite system.

The vehicle of the present invention may be further configured to autonomously move between locations, wherein it may be further configured to move to a predefined location based on location data of such vehicle obtained by the means for localisation.

Furthermore, the vehicle of the present invention may be further configured to create an association between identified plants and their respective location, thereby allowing to create a mapped database of identified plants. The vehicle may this be further configured to associate an identified plant with a location data obtained by the means for localisation.

In another aspect of the present invention, the vehicle may comprise at least one battery and at least one electric engine to move the vehicle, powered by the battery, thereby being electrically powered. The several components and/or modules of the vehicle are thereby electrically powered. The vehicle may thus be further configured to, upon depletion of the battery down to a predefined level, move to a docking station for recharge of the battery.

It is also an object of the present invention a system of forestry autonomous vehicles comprising at least two electrically powered vehicles, the two vehicles being couplable through at least one plug, such plug providing an electrical interface to share the electric power between the two vehicles and/or communication interface, the two vehicles being configured to move in a solidary form. Such solution allows to boost the power available to a single solution, since the two vehicles share an available electrical power.

Furthermore, in a subsequent aspect of the system of the present invention, it further comprises a connection provided between the storage means of a first vehicle and the storage means of a second vehicle, configured such that mulched and/or chipped elements are transportable from the storage means of a first vehicle and the storage means of a second vehicle.

### EMBODIMENTS

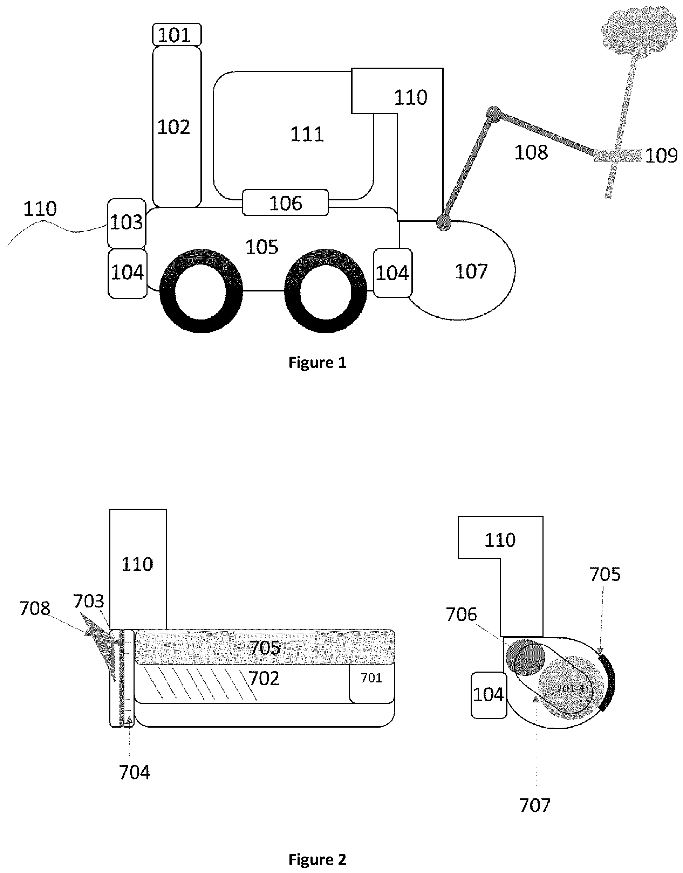

Additional aspects of embodiments of the vehicle of the present invention are subsequently described resorting to Figures 1-7.

Reference is made to **Fig. 1** which contains a representation a vehicle according to the present invention. As depicted by **Fig. 1****,** it comprises an electrical mobile platform **105,** which is suitable to support the several modules and/or components of the vehicle. The vehicle is able to sense the environment through optical sensors **101,** that are attached to the control means comprising a processing unit **102,** configured to implement the described control operations, for instance to process information from the sensors and control all machinery actuators.

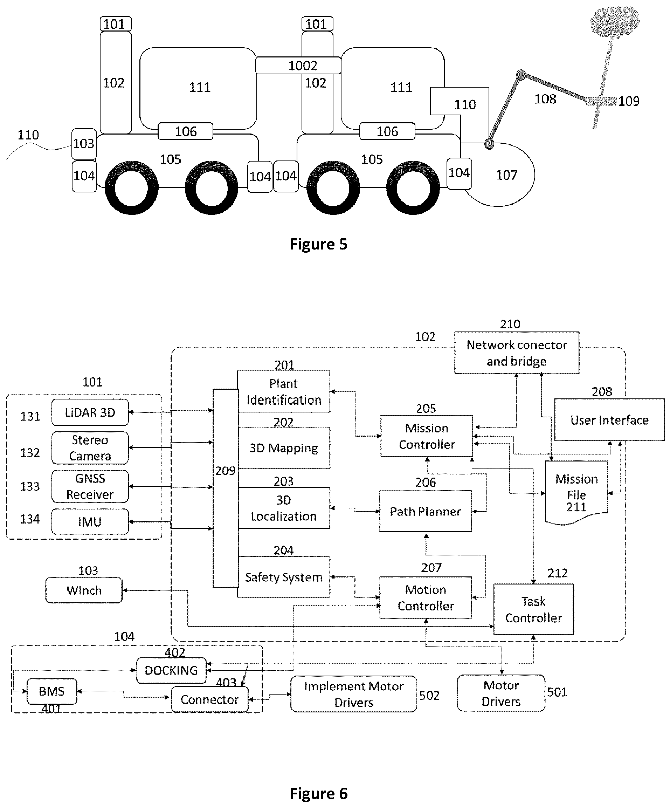

Resorting to Figure 6, the control means of the vehicle may be configured with a mission file **211** which automatic or manually inserted by a human operator through a user interface **208** and/or received through a Network connector and bridge **210.** The user interface **208** may be composed by a touch screen and respective user graphical interfaces. The mission file **211** defines an operation area - a physical area - for the vehicle, for instance using universal coordinates in the World Geodetic System 84 (WGS 84) framework. In the mission file **211** is also defined which identified plants/trees should be mulched, chipped and/or stored/harvested.

The control means of the vehicle of the present invention may be further configured to compute 3D localization **203** and Mapping **202,** based on optical data and the means for localisation, which comprise, respectively, a LiDAR based sensor **131,** one or more optical sensors **132** (such stereo cameras), a Global Navigation Satellite System (GNSS) receiver **133** and an Inertial Measurement Unit (IMU) **134.** The vehicle is configured to, through the 3D mapping block **202,** build a 3D map, which may contain with semantic annotations. With the optical and means for localisation data **(131** to **134),** together with a 3D map supplied the 3D mapping block **202,** the vehicle is configured to - through the 3D Localization block **203** - feed a movement route of the vehicle in the WGS 84 framework, wherein the vehicle may be further configured to comprise a mission controller and a path planner for controlling such movement route. The 3D Localization block **203** can operate without GNSS signals.

The control means of the vehicle may be further configured to provide plant identification, as well as classification, through a plant identification block **201,** in real time. The Plant identification block **201** is fed by optical data **131, 132.** It may also be fed by the 3D localisation **203.** It may also feed the Mission Controller **205** with a list of identified plants and respective 3D localization.

The control means of the vehicle may be further configured with a safety system block **204** which is fed by optical and means for localisation data **131-134,** as well as by 3D Mapping and 3D localisation **202-203.** If, based on such data, an event determined as unsafe is detected, the safety system block **204** and has the highest level of priority in a control structure, to stop all robot motors. The safety system block **204** is able to stop the vehicle's motion if, for instance, optical data identifying a human or an animal is identified, for instance blocking the vehicle or is in its path. Besides, the safety system block **204** is able to stop the vehicle's motion if the vehicle is outside of delimited area of operation defined in mission file **211.** The safety system block **204** is also able to stop the vehicle if a danger posture is reached and notified by IMU sensor.

The control means of the vehicle is configured to have a Mission controller block **205.** The Mission controller block **205** is fed by mission file **211,** vehicle localization from **203,** 3D Map from **202,** and by list of identified plants from **201.** With this information the Mission controller **205** schedules a set of operations that are then decomposed in a list of actions to feed the Path Planner **206,** the Motion Controller **207** and a task controller **212.** The path planner **206** is able to find an optimal parametric path from the current vehicle position to a next desired 3D position/location. The Motion Controller **207** is able to translate the parametric path given by **206** into electrical signals to feed electrical motor drivers **501** that are responsible for the vehicle's motion.

The referred task controller **212** of the control means is able to coordinate end tools motors connected to a universal connector **104.** The implement motor drivers **502** of the mulcher and chipper **107,** manipulator **108,** cutting element **109** is connected electrically to electrical connector **403** of universal connector **104.** The task controller **212** is also able to directly control winch **103.**

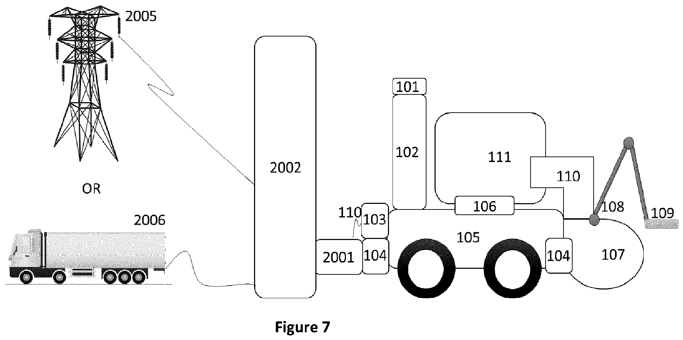

Furthermore, the control means may further be configured with a Battery Management System (BMS) **401,** able to detect low levels of autonomy (low battery). In such case, the automatic recharging mission is trigged in the mission controller block **205** and the vehicle moves towards the recharging station element **2002** (Figure 7). The docking procedure is realized with support of a docking element **402** that fed the Motion Controller **207** to support the connection between universal connector **104** and charging plug **2001.**

The vehicle is further configured to share information sensed, processed and stored in element **102** with a predefined server, through a Network connector and bridge block **210,** and for continuous remote vehicle monitoring. This connector shares to a predefined server all. Such configuration further enables remote teleoperation from a remote human operator.

The electrical and mechanical plug **104,** in **Fig. 1** and **Fig.5** ensures the connectivity to the implement **107,** to another mobile platform **105,** or to an automatic charging station, shown in **Fig. 7****.**

Now referring to **Fig.1** the several modules of the vehicle may be supported on an electrical mobile platform **105.** The vehicle comprises a mulching rod or chipper element **107** capable of destroying the weed vegetation, and blowing the material resulting from the crushing through the connecting means **110** into the tipping transport box **106** and **111.** The control means and means for selective identification **102** enable to select the rods to cut/mulch/chip, and in a particular embodiment cut them using the cutting element **109** and the arm **108** (which provides the previously referred three degrees of rotation and one of translation). Then, the cut element may be inserted into the chipper element in **107.** The material resulting is sent to the tipping transport box **106** and **111.**

To enable operations in high steep slopes the vehicle may comprise an electrical winch **103** with a cable to be attached to static point on the forest. The winch control is realized in a coordinated way by the motion controller **207,** **Fig. 6****.**

Referring to **Fig. 2****,** it illustrates two perspective views of the multifunctional forestry harvesting. The vehicle comprises has a fully integrated chipper **(703** and **704)** with a mulching rod **(702)** and centrifugal tool **706** (part of the connecting means). The chipper elements **703** and **704** are solidary connected to the mulching rod **702,** that are connected to an electrical motor **701.** This electrical motor **701** is electrically connected to the element **104.** The electrical motor **701** is automatically controlled by the **207**-software element of the control means. The connecting means comprises elements **704** and **706** that are responsible to throw the woody residues through the element **110.** The element **706** is responsible to throw the woody residues mulched by the element **702** and the element **704** to throw the woody residues chipped by the element **703.** The element **706** is mechanically connect to the element **703 and 702** by means of element **707.** The element **708** is a guiding element for the material collected by element **109.**

The element **705** is a slide protection window, when the mulching rod **702** is not in the mulching mode, this window closes the mulching rod **702** from the outside. When the vehicle is in mulching mode, the window can be in two modes recovering material or restore mode. In the recovering mode the woody residues are sent to the connecting means element **110** and therefrom to the storage means **111.** In the restore mode the woody residues are left on the ground/forest. This protection window **705** is controlled by an electrical motor in turn controllable by the control means. The protection window **705** is automatically controlled by the **207**-software element of the control means.

The cutting head **109** of **Fig. 1** is detailed in **Fig. 3****.** Such head part of the cutting means is coupled to the robotic arm (part of the manipulator) to the element **807** of the manipulator, represented in **Fig. 4****.** Such head **109** is used to cut and grab the selected rods throughout the biomass harvesting operation. **In** **Fig. 3****,** the selected rod, based on the optical data of the optical means **101** and on the control means and means for selective identification **102,** is first grasped using the claw comprising articulated forceps **901, 902** and **908.** Then, the cut is made by means of the mobile electric saw **905** (the cutting element). The selected rod, after cutting, is secured by means of the articulated forceps **901** and **902** and driven into the chipping or mulching means **903, 904** and **906.** These moving toothed elements **903, 904** and **906** are then used to push the rod into the mulching or chipping means in **107.**

Referring to **Fig. 4****,** the electric articulated arm has 4 degrees of freedom and is used to take the cutting tool to the selected rod and bring it to the mulching or chipping means in **107.** It can rotate around the **804** axis and rotate at the **802** and **803** joints. It is telescopic at **806** and **807.** The element **807** has a mechanical element to hold on the cutting head **109.**

For cutting the selected shoots, the movement of the parts of the manipulator comprising elements **801 to 807** are controlled to access the base of the shoot to be cut. The shoot is grasped through the claw **901** and **902** and then the cut is made with the chainsaw **905.** After cutting, the cut shoot is transported by the manipulator (a crane) **801 to 807** to the mulching or chipping means. The manipulator **801 to 807** keeps the shoot secure by the claw **901** and **902** and pushes the shoot into the mulching or chipping means until the feed rollers inside of **703** "pull" the shoot into the milling drum **703.** Once inside the milling drum **703,** the shoot is smashed by means of the laminated disc and the resulting chips are driven into the tunnel **110** by means of hammers **704.** The chips are channelled through the tunnel **110** and exit through the adjustable outlet to the tipping transport box **111.** Due to gravity, the chips fall into a tipping transport box **111.**

When the tipping transport box **111** is full the element **106** will be activated by the vehicle to replace this tipping transport box by another one in a docking point. The element **106** has several electrical motors to perform this operation and they are automatically controlled by the **207**-software element of the control means.

Referring to **Fig. 5****,** Interface **104** allows two vehicles to be coupled for transport, making it possible to increase the load capacity, and thereby providing the system of the present invention. The excess load in the tipping transport box **111** of the harvesting robot is sent through the connection channel **1002** to the transport tipping box **111** of the transport vehicle.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

### REFERENCES

[1] Pan, Yude; Birdsey, Richard A.; Phillips, Oliver L.; Jackson, Robert B. (2013). "The Structure, Distribution, and Biomass of the World's Forests" (PDF). Annu. Rev. Ecol. Evol. Syst. 44: 593-62. doi:10.1146/annurev-ecolsys-110512-135914. Archived (PDF) from the original on 7 August 2016.

## Claims

1. A forestry autonomous vehicle **characterised in that** it comprises:
- mulching and/or chipping means configured to mulch and/or chip at least one element of a forest plant,
- sensing means, the sensing means comprising optical means capable of obtaining optical data from at least one section at least partially surrounding the vehicle,
- means for selective identification configured to identify at least one element of a forest plant to be mulched and/or chipped based on the optical data obtained by the sensing means, and
- control means, the control means being configured for, based on optical data on the identified at least one element of a forest plant, actuate the mulching and/or chipping means to mulch and/or chip the identified at least one element of a forest plant.

2. A vehicle according to the previous claim, wherein the means for selective identification are configured to, based on the optical data obtained by the sensing means, identify at least one element of a forest plant to be mulched and/or chipped and/or at least one element of a forest plant to be left intact.

3. A vehicle according to any of the preceding claims, wherein it further comprises:
- storage means for storing mulched and/or chipped elements of forest plants, and
- connecting means configured to connect the storage means to the mulching and/or chipping means and thereby transport a mulched and/or chipped element into the storage means and, preferably,
the means for selective identification are further configured to determine if the identified at least one element of a forest plant to be mulched and/or chipped is to be stored, the control means being further configured to actuate the connecting means such that a mulched and/or chipped element is transported and thereby provided into the storage means based on such determination of the means for selective identification.

4. A vehicle according to any of the preceding claims, wherein the mulching and/or chipping means comprise:
- mulching means configured to mulch at least one element of a forest plant, preferably consisting of a mulching rod, and/or
- chipping means configured to chip at least one element of a forest plant, preferably consisting of a chipper.

5. A vehicle according to any of the claims 3-4 wherein the connecting means comprise suction or blowing means, able to transport a mulched and/or chipped plant element from the mulching and/or chipping means into the storage means and, preferably, the connecting means further comprise a tunnel, the tunnel being so arranged that in one edge is connected to the mulching and/or chipping means and on an opposite edge is releases the mulched and/or chipped plant elements from above or adjacently to a top section of the storage means, the suction or blowing means being configured to provide the movement of mulched and/or chipped plant elements through the tunnel and into the storage means.

6. A vehicle according to any of the preceding claims wherein it further comprises cutting means, the cutting means being configured to cut at least one element of a forest plant, thereby separating such element from a remaining part of the forest plant wherein, preferably, the means for selective identification are further configured to identify at least one element of a forest plant to be cut based on the optical data obtained by the sensing means.

7. A vehicle according to the previous claim wherein the cutting means comprise manipulating means configured to grasp the at least one element of the forest plant and at least one cutting element configured to cut the element of the forest plant.

8. A vehicle according to the previous claim wherein the means for selective identification are further configured to:
- determine if the identified at least one element of a forest plant to be cut is further to be mulched and/or chipped, the control means being further configured to actuate the manipulating means such that a cut element is provided onto the mulching and/or chipping means and thereby mulched and/or chipped based on such determination of the means for selective identification, and/or
- determine if the identified at least one element of a forest plant mulched and/or chipped upon cutting is also to be stored, the control means being further configured to actuate the connecting means such that a mulched and/or chipped upon cutting element is transported and thereby provided into the storage means based on such determination of the means for selective identification.

9. A vehicle according to any of the claims 7-8 wherein the manipulating means configured to grasp comprise at least one claw formed by two claw elements configured to cooperate to grasp at least one element of a plant.

10. A vehicle according to the claims 7-9 wherein the manipulating means configured to grasp are further configured to have:
- at least three degrees of freedom providing rotation, one of such degrees of freedom providing rotation around an axis substantially parallel to a ground plane and two of such degrees of freedom providing rotation round an axis substantially perpendicular to the ground plane,
- an additional degree of freedom providing translation, such translation being provided at an edge of the manipulating means, such edge comprising the claw and the cutting element, and the translation providing a higher or lower extension of such edge.

11. A vehicle according to any of the preceding claims wherein it comprises mobility means, the mobility means being capable of providing a movement of the vehicle in any direction of a terrain plane, preferably comprising i) at least two shafts with two wheels each, wherein at least one of such shafts preferably the two shafts, is rotatable, or comprising ii) tracks.

12. A vehicle according to any of the preceding claims wherein the forest plant consists of a tree or a bush, more preferably comprising Eucalyptus, Pinus, Gorse, Acacia, Genisteae and/or Bramble.

13. A vehicle according to any of the preceding claims wherein the optical means comprise Light Detection and Ranging (LiDAR) based sensor, at least one optical sensor such as a stereo camera, preferably at least two optical sensors, and their combinations.

14. A vehicle according to any of the preceding claims wherein it further comprises means for localisation, the means for localisation preferably comprising at least one inertial sensor and/or a global navigation satellite system, preferably the vehicle being further configured to associate an identified plant with a location data obtained by the means for localisation.

15. A method for automatic forest vegetation maintenance and/or biomass harvesting, wherein it comprises using the vehicle of any of the preceding claims for mulching, chipping and/or harvesting at least one element of a plant, preferably further comprising using the obtained mulched and/or chipped and harvested plant element for inclusion in biocompositive materials, pellets, biogas, or in organic fertilizers.
